# EUROPÄISCHE PATENTSCHRIFT

(11) **EP 1 206 333 B1**
(45) Veröffentlichungstag und Bekanntmachung des Hinweises auf die Patenterteilung: **24.11.2004**
(21) Anmeldenummer: 00993576.8
(22) Anmeldetag: 25.11.2000
(51) Int. Cl.: B24B 55/02, F16B 2/18

(54) **WINKELSCHLEIFERSCHUTZHAUBE**
PROTECTING CAP FOR A RIGHT ANGLE GRINDER
CAPOT PROTECTEUR DE MEULEUSE D'ANGLE

(30) Priorität: 10.01.2000 DE 10000701
(43) Veröffentlichungstag der Anmeldung: 22.05.2002
(73) Patentinhaber: ROBERT BOSCH GMBH, 70442 Stuttgart (DE)
(72) Erfinder: WALZ, Roland, 70567 Stuttgart (DE); STIERLE, Peter, 71111 Waldenbuch (DE); DAMMERTZ, Ralph, 70567 Stuttgart (DE); SULEA, Maria-Margareta, 70771 Leinfelden-Echterdingen (DE); HEESS, Stefan, 70794 Filderstadt (DE)
(86) Internationale Anmeldenummer: PCT/DE2000/004211
(87) Internationale Veröffentlichungsnummer: WO 2001/051253

(56) Entgegenhaltungen:
- WO-A-92/00834
- DE-A- 2 225 629
- DE-A- 3 128 252
- GB-A- 1 481 136
- GB-A- 2 121 135

## Beschreibung

### Stand der Technik

Die Erfindung geht von einer Winkelschleiferschutzhaube mit den Merkmalen des Oberbegriffs des Anspruchs 1 aus.

Durch die EP 0 537 198 B1 ist eine Schutzhaube bekannt, die eine Spannvorrichtung zum Festspannen am Spannhals einer Handwerkzeugmaschine, insbesondere eines Winkelschleifers, aufweist. Die Spannvorrichtung ist an einem Spannband, das fest mit der Schutzhaube verbunden ist, angebracht. Die Enden des Spannbandes sind jeweils als Öse ausgebildet. Die Spannvorrichtung besteht aus einem Spannhebel und einem Übertragungsglied, wobei sowohl das Übertragungsglied als auch der Spannhebel jeweils mit einem Ende des Spannbandes so verbunden ist, daß sie jeweils um eine von den Ösen ausgebildete Drehachse verschwenkbar sind. Desweiteren ist das Übertragungsglied um eine weitere Drehachse schwenkbar im Spannhebel gelagert, wobei die drei Drehachsen parallel zueinander stehen und nicht zusammenfallen. Dadurch arbeitet die Spannvorrichtung beim Spannen bzw. Entspannen wie eine Kniehebelvorrichtung. Durch eine solche Ausgestaltung ist es möglich, die Schutzhaube am Spannhals des Winkelschleifers ohne die Benutzung zusätzlicher Hilfswerkzeuge, wie beispielsweise einen Schraubendreher, auszuwechseln.

### Vorteile der Erfindung

Die erfindungsgemäße Winkelschleiferschutzhaube mit den kennzeichnenden Merkmalen des Anspruchs 1 hat demgegenüber den Vorteil einer kostengünstigeren Ausführung, wobei der Vorteil des oben genannten Standes der Technik, nämlich ein Abnehmen der Winkelschleiferschutzhaube vom Winkelschleifer ohne die Benutzung eines Hilfswerkzeugs möglich ist.

Dadurch, daß das zweite Spannelement als eine Feder ausgebildet ist, ist es möglich, Fertigungstoleranzen der Bauteile der Winkelschleiferschutzhaube auszugleichen. Dies wird durch die Elastizität der Feder in gewissem Umfang ermöglicht. Außerdem ist es möglich, daß das Spannband in größerem Maße aufgebogen oder zusammengedrückt werden kann, als dies beim Stand der Technik möglich war, da die als zweites Spannelement verwendete Feder nicht ständig in das als zweite Öse ausgebildete Ende eingreift, sondern nur im vorgespannten Zustand und im gespannten Zustand. Die Winkelschleiferschutzhaube ist dann fest mit einem Winkelschleifer verbunden.

Dadurch, daß das erste Ende des Spannhebels einen exzentrischen Schenkel aufweist, der exzentrisch zur ersten Achse ausgebildet ist und einem ersten Absatz des Spannbandes im Bereich der ersten Öse zugeordnet ist, mit dem er in Anschlaglage bringbar ist, wird zum einen eine Begrenzung des Öffnungswinkels und zum anderen eine Sicherung gegen ungewolltes Heraustreten des Spannhebels aus der ersten Öse bewirkt.

Vorteilhaft ist es, die Feder wellenförmig in einer Richtung senkrecht zu einer der Achsen auszubilden. Damit können Fertigungstoleranzen der beiden Enden des Spannbandes, die als Ösen ausgebildet sind, und des Spannhebels gut ausgeglichen werden. Wenn die Feder aus Draht besteht, so kann sie besonders leicht hergestellt werden und es wird gegenüber einer blattförmigen Feder Gewicht eingespart.

Vorteilhaft ist der Draht so gebogen, daß seine Enden sich gegenüber liegen und parallel zur zweiten Achse stehen und die Kontur eines flachen rechteckigen Körpers einnehmen.

Dadurch wird die Sicherheit erhöht, daß die Feder nicht aus dem Spannhebel herausrutscht.

Weiterhin ist es vorteilhaft, wenn die Wellenform der Feder unterschiedliche Amplituden aufweist, sowie wenn die Feder eine Form ausweist, die symmetrisch zu einer senkrecht auf der zweiten Achse stehenden Symmetrieebene ist. Solche Federn sind einfach herzustellen und wirken aufgrund ihrer Symmetrie mit den übrigen Elementen der Spannvorrichtung besonders gut zusammen.

Weiterhin ist es vorteilhaft, wenn über die Innenfläche des Spannbandes eine Nase hervorsteht und/oder an den Innenflächen des Spannbandes eine Wölbung vorgesehen ist. Dadurch wird zum einen eine axiale Sicherung gegen einen Verlust der Winkelschleiferschutzhaube gewährt, da die Nase in eine Nut am Spannhals eingreifen kann. Zum anderen wird durch die Wölbung eine Verdrehung der Winkelschleiferschutzhaube zum Spannhals in azimutaler Richtung bezüglich der Drehachse der Arbeitsspindel verhindert.

Besonders vorteilhaft ist es, wenn die Nase und die Wölbung in einer Richtung parallel zur ersten Achse übereinander angeordnet sind. Dadurch sind sie sehr einfach und in nur einem Arbeitsgang, beispielsweise durch Prägen, herstellbar.

Weitere, vorteilhafte Ausgestaltungen der Erfindung ergeben sich aus den abhängigen Ansprüchen.

### Zeichnungen

Die Erfindung ist anhand eines in den Zeichnungen dargestellten Ausführungsbeispiels in der nachfolgenden Beschreibung näher erläutert. Es zeigen:
- Figur 1: eine Ansicht eines Ausführungsbeispiels einer Winkelschleiferschutzhaube von oben gesehen,
- Figur 2: eine perspektivische Darstellung der Winkelschleiferschutzhaube aus Figur 1,
- Figur 3: eine Feder aus der gleichen Richtung gesehen wie in Figur 1,
- Figur 4: eine perspektivische Ansicht der Feder aus Figur 3,
- Figur 5: eine Ansicht der Feder aus der Richtung V in Figur 3,
- Figur 6: eine Ansicht des Spannhebels in vergrößertem Maßstab aus der gleichen Richtung gesehen wie in Figur 1,
- Figur 7: eine Ansicht des vergrößerten Spannbandes in vergrößertem Maßstab aus der zu Figur 1 entgegengesetzten Richtung gesehen,
- Figur 8: einen vergrößerten Ausschnitt des Spannbandes aus Figur 7 und
- Figur 9: eine perspektivische Ansicht des Spannbandes aus Figur 7.

### Beschreibung des Ausführungsbeispiels

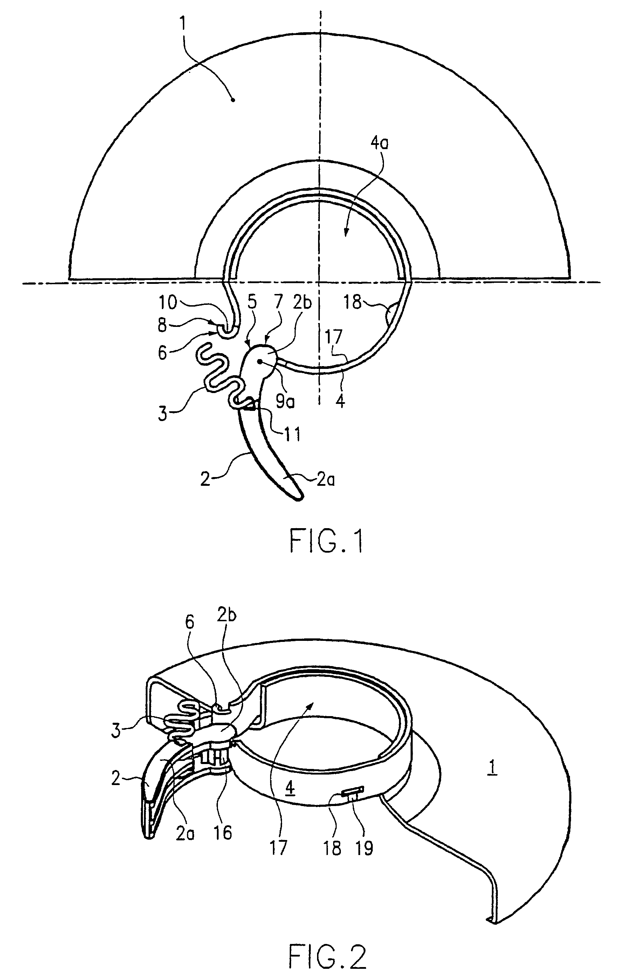

Figur 1 zeigt eine Winkelschleiferschutzhaube 1, an der ein Spannband 4 angebracht ist. Das Spannband 4 ist dabei fest mit der Winkelschleiferschutzhaube 1 verbunden, beispielsweise indem es mit ihr verschweißt ist. Das Spannband 4 weist zwei Enden 5, 6 auf, die als erste bzw. zweite Öse 7,8 ausgebildet sind. In der ersten Öse 7, ist ein einarmiger, einen Handgriff 2a aufweisender Spannhebel 2 um eine ortsfeste erste Achse 9a, die senkrecht auf die Zeichenebene steht, schwenkbar gelagert. Der Spannhebel 2 weist außerdem einen exzentrischen Schenkel 2b auf, der exzentrisch über die erste Öse 7 hervorsteht. In dem Spannhebel 2 ist eine Feder 3 um eine zweite Achse 11, die parallel zur ersten Achse 9a ausgebildet ist und nicht mit dieser zusammenfällt, schwenkbar gelagert. Spannhebel 2 und Feder 3 bilden dabei eine Spannvorrichtung, mittels derer das Spannband 4 zusammengezogen werden kann. Über die Innenfläche 17 des Spannbandes 4 ragt eine vorzugsweise durch Prägen hergestellte Nase 18 hervor.

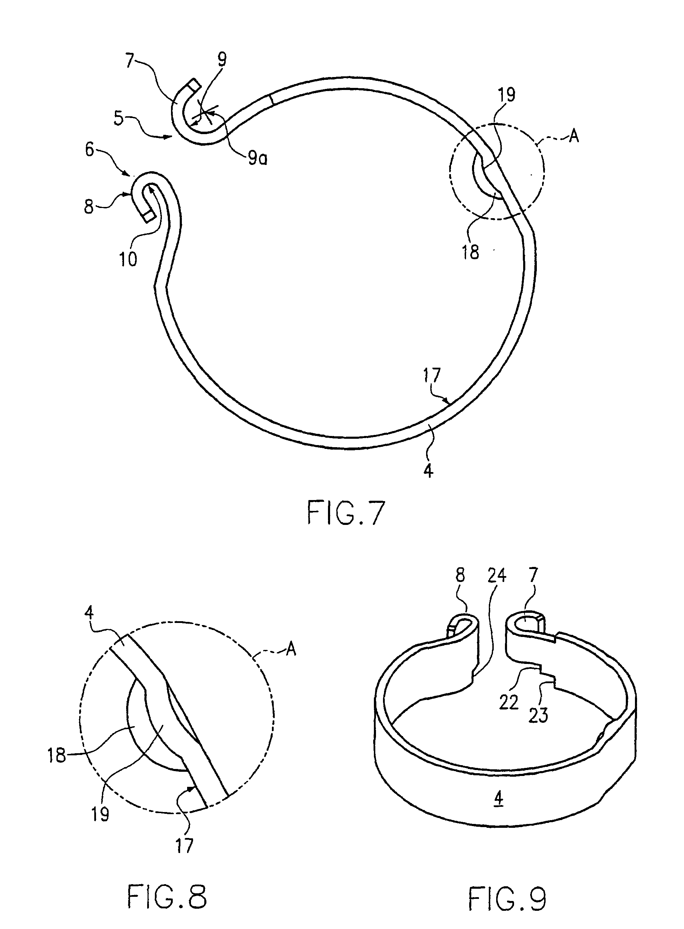

Figur 2 zeigt eine perspektivische Ansicht des Gegenstandes aus Figur 1, wobei als zusätzliches Merkmal, das in Figur 1 nicht erkennbar ist, am Spannband 4 eine radial nach innen weisende Wölbung 19 zu erkennen ist. Diese Wölbung 19 befindet sich unterhalb der Nase 18. Zur näheren Ausgestaltung dieser beiden vorzugsweise in einem gemeinsamen Prägevorgang gefertigten Elemente wird auf die Beschreibung zu den Figuren 7 und 8 verwiesen.

Ausgeliefert wird die Winkelschleiferschutzhaube 1 in einem vormontierten Zustand. Dabei ist das freie, nicht mit dem Spannhebel 2 verbundene Ende der Feder 3 schon in die zweite Öse 8 eingehängt. Die zweite Öse 8 wurde nach dem Einhängen der Feder 3 zusammengedrückt, damit die Feder 3 nicht mehr aus der zweiten Öse 8 herausrutschen kann. Dadurch wird durch das Spannband 4, den Spannhebel 2 und die in die zweite Öse 8 eingehängte Feder 3 eine Öffnung 4a gebildet. Diese Öffnung 4a kann in ihrem Durchmesser über einen bestimmten, vorgegebenen Wert hinaus nicht mehr aufgebogen werden. Dadurch wird verhindert, daß die Winkelschleiferschutzhaube 1 auf einen Winkelschleifer aufgesetzt werden kann, für den sie wegen ihrer Größe nicht bestimmt ist.

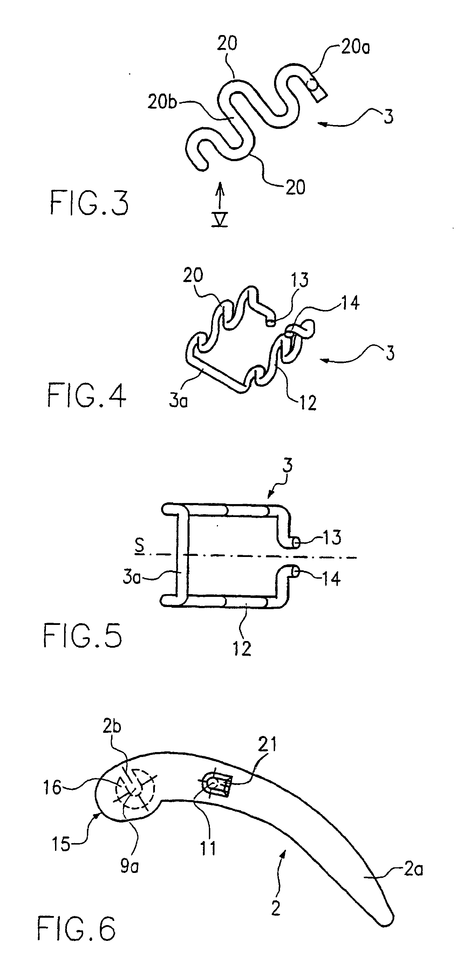

Die Montage der oben beschriebenen Winkelschleiferschutzhaube 1 an einem Winkelschleifer (nicht gezeigt) geht so vor sich, daß die vom Spannband 4 gebildete Öffnung 4a über einen Spannhals (nicht gezeigt) des Winkelschleifers geschoben wird, so daß die Nase 18 in eine am Spannhals ausgebildete Ringnut (nicht gezeigt) ragt. Sodann wird der Spannhebel 2 um die erste Achse 9a, die von einem Achsbolzen 16 gebildet wird, vom Spannband 4 weggeschwenkt, so daß die Feder 3 um die zweite Öse 8 des Spannbandes 4 schwenkend der Bewegung des Spannhebels 2 folgt. Dabei greift die Feder 3 mit einem geraden Bereich 3a (siehe Figur 4 und 5), der als Achse dient, in die zweite Öse 8 und wird um die zweite Achse 11 im Spannhebel 2 verschwenkt. Wird anschließend der Spannhebel 2 zum Spannband 4 zurückgeschwenkt, legt sich der Bereich 3a der Feder 3 an dem zweiten Widerlager 10 an. In dieser Stellung ist die Spannvorrichtung in ihrem vorgespannten Zustand. Der Spannhebel 2 wird dann weiter in Richtung des Spannbandes 4 verschwenkt, so daß die beiden Enden 5,6 des Spannbandes 4 durch die als Kniehebel arbeitende Spannvorrichtung aus Spannhebel 2 und Feder 3 zusammengezogen wird. Dabei verringert sich der Durchmesser der Öffnung 4a im Spannband 4 und die Nase 18 greift in die Radialnut des Spannhalses des Winkelschleifers ein. Die Spannung des Spannbandes 4 um den Spannhals wird beim Spannen ständig erhöht, so daß das Spannband 4 so stark an den Spannhals gepreßt wird, daß eine drehsichere Verbindung zwischen dem Winkelschleifer und der Winkelschleiferschutzhaube 1 gewährleistet ist. Die als Kniehebelsystem ausgebildete Spannvorrichtung löst sich dabei auch nicht selbsttätig durch die Spannung im Spannband 4, da der Spannhebel 2 beim Spannen des Spannbandes 4 über einen Totpunkt läuft, ab dem eine hinsichtlich der Öffnung 4a radiale Kraft aufgewandt werden muß, damit der Spannhebel 2 zur Entspannung des Spannbandes 4 wieder über diesen Totpunkt hinausläuft. Der Totpunkt wird erreicht, wenn das zweite Widerlager 10, die erste Achse 9a und die zweite Achse 11 in einer Ebene liegen.

Das Abnehmen der Winkelschleiferschutzhaube 1 vom Winkelschleifer geschieht in umgekehrter Reihenfolge wie die Montage. Dadurch ist es ohne die Verwendung eines Werkzeugs, beispielsweise eines Schraubendrehers, möglich, die Winkelschleiferschutzhaube 1 sicher und zuverlässig mit einem Winkelschleifer zu verbinden.

Die Spannvorrichtung aus Spannhebel 2 und Feder 3 sowie das Spannband 4 sind auf die jeweilige Größe des Spannhalses abgestimmt. Durch die Verwendung der Feder 3 ist es in vorteilhafter Art und Weise möglich, Fertigungstoleranzen sowohl im Spannband 4, beispielsweise bei der Ausgestaltung der beiden sich an ihren Enden 5, 6 befindlichen Ösen 7,8 als auch der Spannvorrichtung, d.h. des Spannhebels 2, beispielsweise hinsichtlich seiner beiden Achsen 9a, 11 sowie der Feder 3 selbst auszugleichen. Dadurch kann eine solche Winkelschleiferschutzhaube 1 sehr preiswert und einfach hergestellt werden.

Figur 3 zeigt die Wellenform der Feder 3. Die Wellenform weist Wellenberge und Wellentäler 20 auf, die über Schenkel 20a, 20b miteinander verbunden sind. Die somit gebildeten Wellen verlaufen in einer Ebene, die senkrecht zur ersten Achse 9a und zur zweiten Achse 11 stehen und die in Figur 3 durch die Zeichenebene gegeben ist. Die abgebildete Feder 3 weist fünf Wellenberge bzw. Wellentäler 20 auf, wobei dies jedoch keineswegs beschränkend ist, da auch eine größere oder kleiner Anzahl von Wellenbergen bzw. Wellentälern 20 ebenfalls verwendet werden kann. Die Wellenberge bzw. Wellentäler 20 weisen jeweils den gleichen Krümmungsradius aus. Auch hierbei handelt es sich nur um eine spezielle Ausgestaltung, die keinesfalls beschränkend ist. Die Amplitude der Wellen ist unterschiedlich, so daß die mittlere Welle eine größere Amplitude als die restlichen Wellen aufweist. Dies wird dadurch realisiert, daß unterschiedlich lange Schenkel 20a, 20b vorhanden sind. Auch diese besondere Ausgestaltung ist keineswegs beschränkend anzusehen, da es genauso gut möglich ist, sämtliche Amplituden gleich groß auszubilden oder auch noch mehr als zwei verschiedene Amplituden für die Wellen auszubilden.

In Figur 4 ist zu erkennen, daß die Feder 3 aus einem Draht 12, insbesondere einem Federstahldraht, gebildet ist. Der Draht 12 ist symmetrisch bezüglich einer Symmetrieebene S (siehe Figur 5) gebogen, die parallel zu den Wellenbergen 20 ausgebildet ist. Die beiden wellenförmigen, symmetrisch zueinander ausgebildeten Teile der Feder 3 sind an einem Ende der Feder 3 über den geraden Bereich 3a miteinander verbunden. Das andere Ende der Feder 3 ist offen, wobei die beiden Enden 13, 14 des Drahtes 12 so gebogen sind, daß sie sich gegenüber liegen und parallel zu den beiden wellenförmigen Teilen der Feder 3 ausgerichtet sind. Gleichzeitig stehen sie damit senkrecht auf den geraden Bereich 3a. Wenn die Feder 3 in den Spannhebel 2 eingesetzt ist, dann ist der gerade Bereich 3a parallel zur zweiten Achse 11, um die die Feder 3 im Spannhebel 2 schwenkbar gelagert ist, und die beiden Enden 13, 14 der Feder 3 stehen dann senkrecht auf die Achse 11.

In Figur 5 ist zu erkennen, wie die beiden Enden 13, 14 der Feder 3 parallel zur Symmetrieebene S ausgebildet sind und sich gegenüberliegen. Durch diese Ausgestaltung der beiden Enden 13, 14 der Feder 3 wird gewährleistet, daß die Feder 3 in ihrem in eine Öffnung 21 (siehe Figur 6) im Spannhebel 2 eingesetzten Zustand, wenn sie wie oben beschrieben vorgespannt ist, nicht aus der Öffnung 21 im Spannhebel 2 herausrutschen kann. Dies ist besonders dann von Vorteil, wenn der Spannhebel 2 aufschnappt, da dadurch verhindert wird, daß die Feder 3 sich von ihm löst, zu Boden fällt und verloren geht. Außerdem ist zu erkennen, daß der gerade Bereich 3a senkrecht auf die Symmetrieebene S steht. Durch die parallele Ausgestaltung des geraden Bereichs 3a zur zweiten Achse 11, somit auch zum zweiten Widerlager 10 der zweiten Öse 8 des zweiten Endes 6 des Spannbandes 4, wird gewährleistet, daß beim Spannen der Spannvorrichtung dieser gerade Bereich 3a paßgenau am Widerlager 10 anliegt und somit ein sicheres Spannen des Spannbands 4 stattfinden kann.

In Figur 6 ist im vergößerten Maßstab der Spannhebel 2 dargestellt. An seinem ersten Ende 15, an dem er mit dem ersten Ende 5 des Spannbands 4 verbindbar ist, trägt der Spannhebel 2 den Achsbolzen 16, der so ausgebildet ist, daß er parallel zur ersten Achse 9a verläuft, wenn der Spannhebel 2 im ersten Widerlager 9 der ersten Öse 7 schwenkbar gelagert ist.

Außerdem trägt der Spannhebel 2 auf seiner dem Handgriff 2a abgewandten Seite den längs vorstehenden, exzentrischen Schenkel 2b. Dieser Schenkel 2b ragt in seinem in der ersten Öse 7 eingebauten Zustand exzentrisch über die erste Achse 9a hinaus. Der Spannhebel 2 hat einen U-förmigen Querschnitt, wobei dessen beiden U-Schenkel die Stirnseiten des Spannbands 2 im Bereich der ersten Öse 7 umgreifen. Der exzentrische Schenkel 2b kommt beim Öffnen des Spannhebels 2 zum Anschlag gegen einen ersten Absatz 22 (siehe Figur 7 und 9), so daß dadurch sowohl das weitere Öffnen als auch ein Herausdrücken des Spannhebels 2 aus der Öse 7 ausgeschlossen ist. Dadurch wird erreicht, daß der Spannhebel 2 im offenen Zustand gegen ein Herausfallen aus der ersten Öse 7 des Spannbandes 4 gesichert wird.

Desweiteren ist die oben beschriebene Öffnung 21 im Körper des Spannhebels 2 zu erkennen, in die die Feder 3 eingesetzt wird. Die nichtkörperlich vorhandene zweite Achse 11, um die sich die Feder 3 in ihrem in den Spannhebel 2 eingesetzten Zustand verschwenken läßt, befindet sich innerhalb dieser Öffnung 21. Die zweite Achse 11 ist dabei parallel zur ersten Achse 9a ausgebildet.

Figur 7 zeigt das Spannband 4 aus der Betrachtungsrichtung, die jener in Figur 1 entgegengesetzt ist. Auf die Ausgestaltungen der beiden Enden 5,6 des Spannbandes 4 wird hier nicht weiter eingegangen, da dies schon hinsichtlich der Beschreibung zu den Figuren 1 und 2 geschehen ist. Die Nase 18 und die Wölbung 19, die über die Innenfläche 17 des Spannbandes 4 herausstehen, sind deutlich zu erkennen. Noch deutlicher sind diese beiden Merkmale in der Figur 8, die eine Vergrößerung des Ausschnitts A der Figur 7 darstellt, gezeigt. Die Nase 18 dient dazu, daß die Winkelschleiferschutzhaube 1 nicht in axialer Richtung am Spannhals verrutschen kann. Dagegen dient die Wölbung 19 dazu, daß eine Verdrehung der Winkelschleiferschutzhaube 1 in azimutaler Richtung bezüglich der Drehachse des Winkelschleifers durch eine größere Anpreßkraft des Spannbandes 4 an den Spannhals verhindert wird. Die beiden Elemente Nase 18 und Wölbung 19 sind dabei in einer Achse, die parallel zur ersten Achse 9a ist, fluchtend übereinander angeordnet.

In Figur 9 ist der zu Figur 6 beschriebene erste Absatz 22 am Spannband 4 gezeigt. Hinsichtlich seiner Wirkung wird auf die Beschreibung zu Figur 6 verwiesen. Des weiteren ist ein zweiter Absatz 23 am Spannband 4 im Bereich des ersten Absatzes 22, parallel zu diesem ausgebildet. Am anderen Ende des Spannbandes 4, benachbart zur zweiten Öse 8, ist ein dritter Absatz 24 ausgebildet, der ebenfalls parallel zum ersten Absatz 22 und zum zweiten Absatz 23 ausgerichtet ist. Der zweite Absatz 23 und der dritte Absatz 24 dienen dem freien Durchtritt der Feder 3 während des Spannvorgangs bzw. Entspannvorgangs beim Montieren der Winkelschleiferschutzhaube 1 an einen Winkelschleifer.

## Patentansprüche

1. Winkelschleiferschutzhaube (1) mit einer Spannvorrichtung, die ein mit der Winkelschleiferschutzhaube (1) fest verbundenes Spannband (4) aufweist, dessen beide Enden (5, 6) als erste bzw. zweite Öse (7, 8) ausgebildet sind, so daß sie ein erstes bzw. zweites Widerlager (9, 10) bilden, und unter Spannung mittels mindestens zweier Spannelemente miteinander verbindbar sind, wobei das erste Spannelement ein Spannhebel (2) ist, der mit seinem ersten Ende (15) in der ersten Öse (7) schwenkbar um eine erste Achse (9a) lagerbar ist, wobei er in eine erste Position verbringbar ist, in der die Spannvorrichtung nicht gespannt ist, und in eine zweite Position verbringbar ist, in der die Spannvorrichtung gespannt ist,
**dadurch gekennzeichnet, daß**
das zweite Spannelement eine Feder (3) ist, die mit dem Spannhebel (2) beweglich verbindbar ist, wobei die Feder (3) um eine mit der ersten Achse (9a) nicht zusammenfallende, zu dieser parallelen zweiten Achse (11) im Spannhebel (2) schwenkbar gelagert ist, und die Feder (3) mit der zweiten Öse (8) des zweiten Endes (6) des Spannbandes (4) lösbarverbindbar ist, wobei die Feder (3) an ihrem mit der zweiten Öse (8) verbindbaren Ende einen geraden Bereich (3a) aufweist, der parallel zum zweiten Widerlager (10) ausgebildet ist, und daß das erste Ende (15) des Spannhebels (2) einen exzentrischen Schenkel (2b) aufweist, der exzentrisch zur ersten Achse (9a) ausgebildet und einem ersten Absatz (22) des Spannbandes (4) im Bereich der ersten Öse(7) zugeordnet ist, mit dem er zur Begrenzung des Öffnungswinkels und als Sicherung gegen ungewolltes Heraustreten aus der ersten Öse (7) in Anschlaglage bringbar ist.

2. Winkelschleiferschutzhaube (1) nach Anspruch 1, **dadurch gekennzeichnet, daß** die Feder (3) wellenförmig in einer Richtung senkrecht zu einer der Achsen (9a, 11) ausgebildet ist.

3. Winkelschleiferschutzhaube (1) nach Anspruch 1 oder 2, **dadurch gekennzeichnet, daß** die Feder (3) aus Draht (12) besteht.

4. Winkelschleiferschutzhaube (1) nach einem der Ansprüche 2 oder 3, **dadurch gekennzeichnet, daß** der Draht (12) so gebogen ist, daß seine Enden (13, 14) sich gegenüber liegen und parallel zur zweiten Achse (11) stehen und die Kontur eines flachen rechteckigen Körpers einnehmen.

5. Winkelschleiferschutzhaube (1) nach einem der Ansprüche 2 bis 4, **dadurch gekennzeichnet, daß** die Wellenform der Feder (3) unterschiedliche Amplituden aufweist.

6. Winkelschleiferschutzhaube (1) nach einen der vorhergehenden Ansprüche, **dadurch gekennzeichnet, daß** die Feder eine Form aufweist, die symmetrisch zu einer senkrecht auf der zweiten Achse (11) stehenden Symmetrieebene (S) ist.

7. Winkelschleiferschutzhaube (1) nach einem der vorhergehenden Ansprüche, **dadurch gekennzeichnet, daß** über die Innenfläche (17) des Spannbandes (4) eine Nase (18) hervorsteht und/oder daß an der Innenfläche (17) des Spannbandes (4) eine Wölbung (19) vorgesehen ist.

8. Winkelschleiferschutzhaube (1) nach Anspruch 8, **dadurch gekennzeichnet, daß** die Nase (18) und die Wölbung (19) in einer Richtung parallel zur ersten Achse (9a) übereinander angeordnet sind.

## Claims

1. Angle-grinder safety guard (1) having a clamping device which has a clamping band (4) which is connected to the angle-grinder safety guard (1) and whose two ends (5, 6) are designed as a first and a second lug (7, 8), respectively, so that they form a first and a second abutment (9, 10), respectively, and can be connected to one another under tension by means of at least two clamping elements, the first clamping element being a clamping lever (2) which, with its first end (15), can be pivotably mounted in the first lug (7) about a first axis (9a), it being possible for it to be brought into a first position in which the clamping device is not tensioned and into a second position in which the clamping device is tensioned, **characterized in that** the second clamping element is a spring (3) which can be movably connected to the clamping lever (2), the spring (3) being pivotably mounted in the clamping lever (2) about a second axis (11) which does not coincide with the first axis (9a) and is parallel to the latter, and it being possible for the spring (3) to be releasably connected to the second lug (8) of the second end (6) of the clamping band (4), the spring (3), at its end which can be connected to the second lug (8), having a straight region (3a) which is formed parallel to the second abutment (10), and **in that** the first end (15) of the clamping lever (2) has an eccentric leg (2b) which is formed eccentrically to the first axis (9a) and is assigned to a first step (22) of the clamping band (4) in the region of the first lug (7), with which step (22) it can be brought into a stop position for limiting the opening angle and as protection against unintentional escape from the first lug (7).

2. Angle-grinder safety guard (1) according to Claim 1, **characterized in that** the spring (3) is of wavelike design in a direction perpendicular to one of the axes (9a, 11).

3. Angle-grinder safety guard (1) according to Claim 1 or 2, **characterized in that** the spring (3) consists of wire (12).

4. Angle-grinder safety guard (1) according to either of Claims 2 and 3, **characterized in that** the wire (12) is bent in such a way that its ends (13, 14) are opposite one another and parallel to the second axis (11) and assume the contour of a flat rectangular body.

5. Angle-grinder safety guard (1) according to one of Claims 2 to 4, **characterized in that** the wavelike shape of the spring (3) has different amplitudes.

6. Angle-grinder safety guard (1) according to one of the preceding claims, **characterized in that** the spring has a shape which is symmetrical to a plane of symmetry (S) disposed perpendicularly to the second axis (11).

7. Angle-grinder safety guard (1) according to one of the preceding claims, **characterized in that** a nose (18) projects beyond the inner surface (17) of the clamping band (4), and/or **in that** a bulge (19) is provided on the inner surface (17) of the clamping band (4).

8. Angle-grinder safety guard (1) according to Claim 8, **characterized in that** the nose (18) and the bulge (19) are arranged one above the other in a direction parallel to the first axis (9a).

## Revendications

1. Capot protecteur de meuleuse d'angle (1) comportant un dispositif de serrage muni d'une bande de serrage (4), reliée à demeure au capot protecteur de meuleuse d'angle (1), dont les deux extrémités (5, 6) prennent la forme d'une première ou d'une deuxième boucle (7, 8) de sorte qu'elles forment une première ou une deuxième butée (9, 10) et peuvent être reliées l'une à l'autre en les serrant à l'aide d'au moins deux éléments de serrage, le premier élément de serrage étant un levier de serrage (2) qui peut être monté par sa première extrémité (15) dans la première boucle (7) de façon à pivoter autour d'un premier axe (9a) et qui peut être amené dans une première position dans laquelle le dispositif de serrage n'est pas tendu et dans une deuxième position dans laquelle le dispositif de serrage est tendu,
**caractérisé en ce que**
le deuxième élément de serrage est un ressort (3) qui peut être relié de façon mobile au levier de serrage (2), le ressort (3) peut alors être monté de façon à pivoter dans le levier de serrage (2) autour d'un deuxième axe (11) qui ne coïncide pas avec le premier axe (9a) et qui lui est parallèle, et le ressort (3) peut être relié de façon détachable à la deuxième boucle (8) de la deuxième extrémité (6) du levier de serrage (4), le ressort (3) présentant, à son extrémité qui peut être reliée à la deuxième boucle (8), une zone (3a) rectiligne qui est parallèle à la deuxième butée (10), et la première extrémité (15) du levier de serrage (2) présente un montant (2b), décentré par rapport au premier axe (9a), qui est associé à un premier épaulement (22) de la bande de serrage (4) dans la zone de la première boucle (7) avec laquelle le montant peut être amené en position de butée afin de délimiter l'angle d'ouverture et de servir de sécurité contre un retrait involontaire de la première boucle (7).

2. Capot protecteur de meuleuse d'angle (1) selon la revendication 1,
**caractérisé en ce que**
le ressort (3) a une forme ondulée dans une direction perpendiculaire à un des axes (9a, 11).

3. Capot protecteur de meuleuse d'angle (1) selon la revendication 1 ou 2,
**caractérisé en ce que**
le ressort (3) est en fil métallique (12).

4. Capot protecteur de meuleuse d'angle (1) selon l'une des revendications 2 ou 3,
**caractérisé en ce que**
le fil métallique (12) est recourbé de telle manière que ses extrémités (13, 14) sont l'une en face de l'autre et parallèles au deuxième axe (12) et suivent le contour d'un corps plat rectangulaire.

5. Capot protecteur de meuleuse d'angle (1) selon l'une des revendications 2 à 4,
**caractérisé en ce que**
la forme ondulée du ressort (3) présente différentes amplitudes.

6. Capot protecteur de meuleuse d'angle (1) selon l'une des revendications précédentes,
**caractérisé en ce que**
le ressort a une forme symétrique par rapport un plan de symétrie (S) placé à la perpendiculaire sur le deuxième axe (11).

7. Capot protecteur de meuleuse d'angle (1) selon l'une des revendications précédentes,
**caractérisé en ce qu'**
un bec (18) dépasse de la surface intérieure (17) de la bande de serrage (4) et/ou une convexité (19) est prévue sur la surface intérieure (17) de la bande de serrage (4).

8. Capot protecteur de meuleuse d'angle (1) selon la revendication 8,
**caractérisé en ce que**
le bec (18) et la convexité (19) sont placés l'un au-dessus de l'autre dans une direction parallèle au premier axe (9a).
